# EUROPEAN PATENT APPLICATION

(11) **EP 1 507 389 A1**
(43) Date of publication of application: **16.02.2005**
(21) Application number: 03018373.5
(22) Date of filing: 13.08.2003
(51) Int. Cl.: H04M 1/27, H04M 1/725

(54) **Mobile phone with means for switching off the alarm remotely**

(71) Applicant: Sony Ericsson Mobile Communications AB, 221 88 Lund (SE)
(72) Inventor: Taneda, Morio, Sony Ericsson Mobile Com. Int. AB, 85609 Aschheim-Dornach (DE); Andersson, Mika, Sony Ericsson Mobile Com. Int. AB, 85609 Aschheim-Dornach (DE)
(74) Representative: Körber, Martin, Dipl.-Phys.

(57) **Abstract**

The present invention provides a mobile phone with a remote alarm control comprising a clock (5) for generating a time information; a data storage means (6) for storing an alert time; an output means (4) for outputting an alert signal when the time information generated by the clock (5) reaches the alert time stored in the data storage means (6); and a detecting means (2) for detecting remote signals by a user in order to stop the outputting of the alert signal by the output means (4).

The present invention further provides a mobile phone with a remote alarm control, comprising an output means (4) for outputting an alert signal when a call is coming in and a detecting means (2) for detecting remote signals by a user in order to stop the outputting of the alert signal by the output means (4).

Hereby, the detecting means (2) can be a voice recognition means or a camera.

## Description

The invention relates to a mobile phone with a remote alarm control according to claim 1 and to a mobile phone with a remote alarm control according to claim 13.

One feature of modern mobile phones is an alarm clock, that is that the phone outputs an audible, visible or mechanical alert signal when the time of the day has reached a predefined time. Further, the phone outputs an alarm when a call is coming in. Once the alarm has started, it must be shut down by pressing one or more keys or buttons of the phone. This means that the user has to touch the phone and to localise the keys or buttons which have to be pressed, which is quite inconvenient.

It is therefore the object of the present invention to provide a remote alarm control system for mobile phones for switching off the alarm of the alarm clock without touching the phone.
It is further an object of the present invention to provide a remote alarm control system for mobile phones for switching off the alarm of an incoming call without touching the phone.

This object is achieved by a mobile phone as defined in claim 1 and a mobile phone as defined in claim 13.

According to the present invention, a mobile phone with a remote alarm control is revealed comprising a clock for generating a time information, a data storage means for storing an alert time, an output means for outputting an alert signal when the time information generated by the clock reaches the alert time stored in the data storage means and a detecting means for detecting remote signals by the user in order to stop the outputting of the alert signal by the output means.

Further, according to the present invention, a mobile phone with a remote alarm control is revealed, comprising an output means for outputting an alert signal when a call is coming in and a detecting means for detecting remote signals by the user in order to stop the outputting of the alert signal by the output means.

By using a detecting means which is able to detect remote signals caused by a user, it is possible for the user to shut off the alarm once it has started without touching the mobile phone. Hereby, the detecting means may be either a camera for the detection of movements or a microphone for voice recognition. As in modern mobile phones a camera and/or a microphone is already comprised, the implementation of the present invention is very simple.

Advantageously the mobile phone comprises an input means for inputting the alert time.

Further, advantageously a processing unit detects the matching between the time information generated by the clock and the alert time stored in the data storage means.

Preferably the processing unit upon matching between the time information generated by the clock and the alert time stored in the data storage means causes the output means to output an alert signal and activates the detecting means.

Advantageously the processing unit deactivates the detecting means after the detecting means has detected a remote signal.

Preferably the processing unit stops the outputting of the signal of the output means after deactivating the detecting means.

The detecting means can be a camera.

Preferably the camera detects motion.

Advantageously the camera detects movement of a predefined shape.

The detecting means can be a voice recognition means.

Preferably the voice recognition means detects voice activity.

The voice recognition means can detect a predefined word.

Embodiments of the invention will now be described by way of example only, with reference to the accompanying drawing, in which:
Fig. 1 is a block diagram showing schematically the elements of the mobile phone,
Fig. 2 is a flow chart showing the process of switching the alarm off and
Fig. 3 is a flow chart showing the process of detecting movement near the mobile phone.

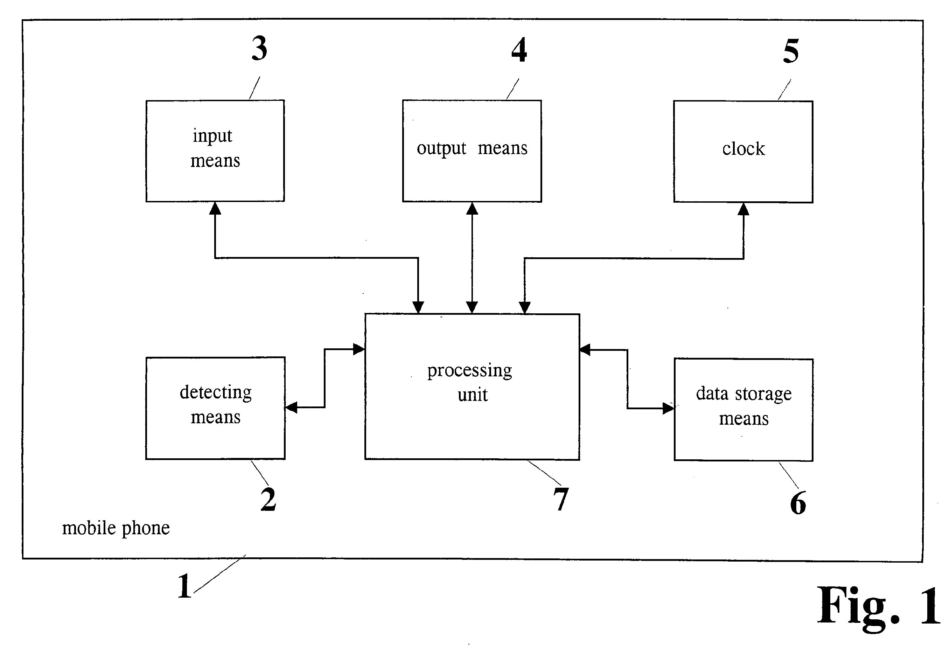

Fig. 1 shows a block diagram of a mobile phone according to the present invention. The mobile phone 1 is adapted to transmit and receive information in a wireless telecommunication system, such as the GSM, UMTS or any other system for the wireless communication of information and data.
The mobile phone 1 comprises an input means 3 for inputting an alert time and date, which may be a keypad, a touch pad or an interface for transmission with different means, e.g. a serial cable. The mobile phone 1 further comprises an output means 4 for outputting an alert signal when the time of the day has reached the alert time input by the user or when a call is coming in, the output means hereby may be a display, a loudspeaker or means for vibration of the mobile phone 1. A clock 5 integrated in the mobile phone 1 generates a time and date information. Further, a data storage means 6 serves for the permanent or volatile storage of data or information. If, for example, the user inputs an alert time via the input means 3, then this alert time is stored in the data storage means 6. The mobile phone 1 further comprises a detecting means 2, which is able to detect remote signals caused by the user e.g. movements or voice. The detecting means 2 may be a voice recognition means or a camera.
A processing unit 7 receives, processes and transmits data between the input means 3, the output means 4, the clock 5, the data storage means 6 and the detecting means 2.

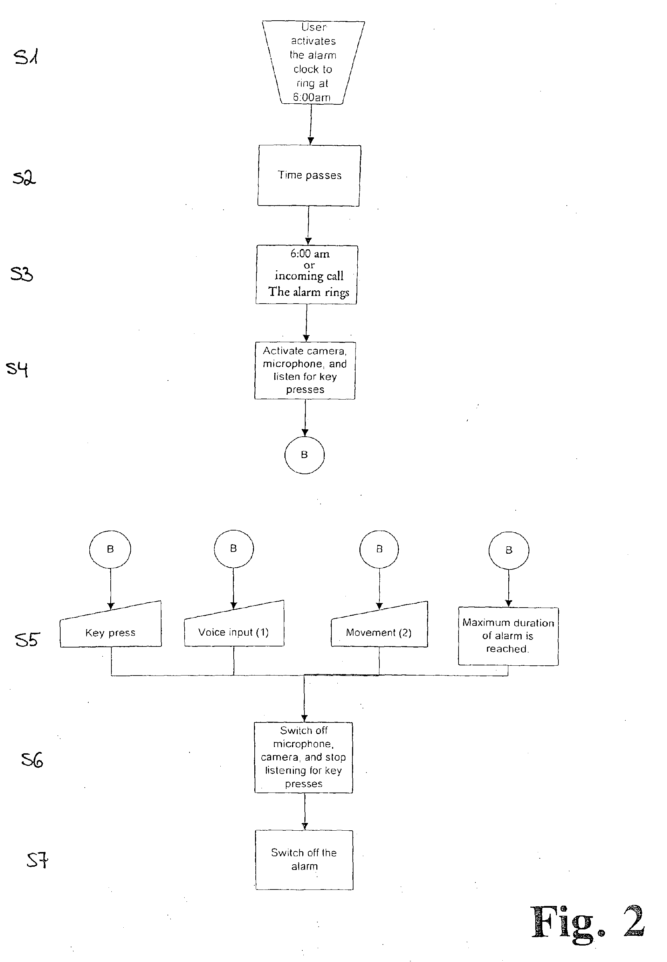

With reference to Fig. 2, the steps for switching off the alarm of the mobile phone 1, are the following:
In a first step S1 the user via the input means 3 inputs an alert time, which is stored in the data storage means 6. In the present example the clock is to ring at 6 a.m. In the next step S2 the time passes which means that the clock 5 continuously generates new time and date information and submits them to the processing unit 7. If in the next step S3 the processing unit 7 detects, that the time information generated by the clock 5 and the alert time stored in the data storage means 6 match or that a call is coming in, then the processing unit 7 causes the output means 4 to output an alarm which may be ringing or vibration of the mobile phone 1. In a step S4 the input means 3 and/or the detecting means 2 are activated, i.e. switched in a detection mode enabling the detection of a signal, which means that the camera or the microphone for voice recognition are activated or that the mobile phone 1 is listening for key presses. If the mobile phone 1 during this process has reached the state indicated with B, then there are four possibilities to continue. In the step S5 a key may be pressed, a voice input may be detected by the detecting means 2 (if it is a voice recognition means), a movement may be detected by the detecting means 2 (if it is a camera) or the maximum duration of the alarm may be reached. After a key is pressed, a voice input, a movement or the reaching of the maximum duration in the next step S6 the detecting means 2, i.e. the voice recognition means and the camera are switched off and the mobile phone stops listening for key presses. In a step S7 then the alarm is switched off, which means that the output means 4 stops outputting the signal.

In one embodiment of the present invention the detecting means 2 may be a voice recognition means for detecting voice input. A part of the GSM standard is voice activity detection (VAD). In its original form VAD is used as part of the speech coding done for regular speech conversation over a GSM phone. The idea of VAD is to recognise human speech from other voice/noise and to only activate speech coding when it is present. For the remote control of the alarm clock, the task of voice recognition can be reduced to a task to detect voice activity. That is because the meaning of the detected speech input is not considered relevant to switch off the alarm. The existence of speech in the proximity is enough. Hence, the processing needed to control voice input is minimal and available e.g. in any chip-set implementing GSM AMR speech codecs. Alternatively a predefined word is detected, which may either be stored in the mobile phone 1 automatically or input by the user via the input means 3 or a microphone and stored in the storage means 6. When the voice recognition is activated, then the processing unit 7 compares the stored word with the detected word and in case of match stops the outputting of the alert signal.

In a second embodiment of the present invention, the detecting means 2 is a camera for detecting movements in order to switch off the alarm. The input to the movement detection comes from video or a still camera of a mobile phone. If the source is a video or still camera does not matter, in either case an image/frame is stored at the time the alarm starts. That image/frame is used as a base-reference to detect a change, i.e. movement. Some requirements are set for the sensitivity of a camera used, namely its sensitivity to light must be good enough to allow the camera to operate in a typical situation of an alarm clock, i.e. in a fairly dark room. Hereby, the detection may not only be limited to movement of every kind, but may comprise also the detection of a predefined movement, e.g. the waving of a hand or an approaching hand. Hereby, not only movement is detected, but also the velocity of the movement and the shape of the moving object.

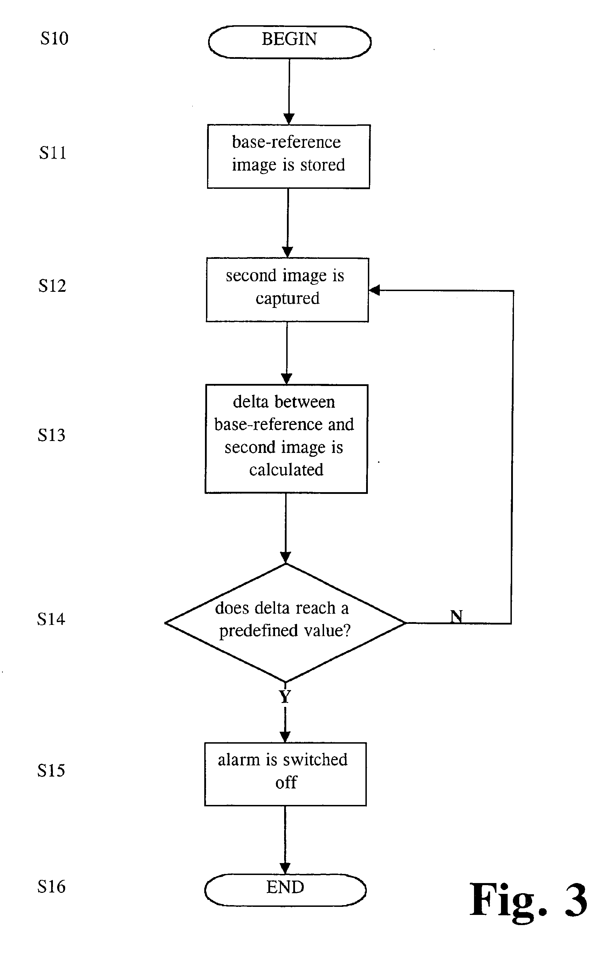

With reference to Fig. 3, the steps of detecting movement and of switching the alarm off, are the following:
In the first step S10 the sequence begins, e.g. with starting the alert and therefore activating the camera. In the next step S11, when the alarm starts, the actual image is stored as a base-reference image either in grey-scale format or as a colour image. In a step S12 a second image is captured. The capturing of the second image may happen every ¼ of a second. The processing unit 7 in the step S13 calculates the delta between the base-reference image and the second image as a difference between each pixels grey-scale value. Hence, for each pixel, XOR of the two images is calculated. The resulting matrix of the calculation is analysed in step S14 by the processing unit 7. If more than 50 per cent of the pixels in the matrix has a value different from zero, a change, and thus a movement, between the base-reference image and the second image is considered to be happened. The processing unit 7 decides whether the movement is considered to be happened in step S 14. In the case of a movement detection in the step S15 the alarm is switched off and the processing ends in the step S 16 e.g. with deactivating the camera. If the delta value in step S 14 does not reach the predefined value, that means that less than 50 per cent of the pixels in the matrix have a value different from zero, then a movement is not considered to be happened and the processing continues with step S 12, which is the capturing of a second image.

## Claims

1. Mobile phone with a remote alarm control comprising
a clock (5) for generating a time information;
a data storage means (6) for storing an alert time;
an output means (4) for outputting an alert signal when the time information generated by the clock (5) reaches the alert time stored in the data storage means (6); and
a detecting means (2) for detecting remote signals by a user in order to stop the outputting of the alert signal by the output means (4).

2. Mobile phone according to claim 1,
**characterised by**
an input means (3) for inputting the alert time.

3. Mobile phone according to claim 1 or 2,
**characterised in,**
**that** a processing unit (7) detects the matching between the time information generated by the clock (5) and the alert time stored in the data storage means (6).

4. Mobile phone according to claim 3,
**characterised in,**
**that** the processing unit (7) upon matching between the time information generated by the clock (5) and the alert time stored in the data storage means (6) causes the output means (4) to output an alert signal and activates the detecting means (2).

5. Mobile phone according to claim 3 or 4,
**characterised in,**
**that** the processing unit (7) deactivates the detecting means (2) after the detecting means (2) has detected a remote signal.

6. Mobile phone according to any of claims 3 to 5,
**characterised in,**
**that** the processing unit (7) stops the outputting of the signal of the output means (4) after deactivating the detecting means (2).

7. Mobile phone according to any of claims 1 to 6,
**characterised in,**
**that** the detecting means (2) is a camera.

8. Mobile phone according to claim 7,
**characterised in,**
**that** the camera detects motion.

9. Mobile phone according to claim 7,
**characterised in,**
**that** the camera detects movement of a predefined shape.

10. Mobile phone according to any of claims 1 to 6,
**characterised in,**
**that** the detecting means (2) is a voice recognition means.

11. Mobile phone according to claim 10,
**characterised in,**
**that** the voice recognition means detects voice activity.

12. Mobile phone according to claim 10,
**characterised in,**
**that** the voice recognition means detects a predefined word.

13. Mobile phone with a remote alarm control comprising
an output means (4) for outputting an alert signal when a call is coming in; and
a detecting means (2) for detecting remote signals by a user in order to stop the outputting of the alert signal by the output means (4).

14. Mobile phone according to claim 13,
**characterised in,**
**that** the detecting means (2) is a camera.

15. Mobile phone according to claim 14,
**characterised in,**
**that** the camera detects motion.

16. Mobile phone according to claim 14,
**characterised in,**
**that** the camera detects movement of a predefined shape.

17. Mobile phone according to claim 13,
**characterised in,**
**that** the detecting means (2) is a voice recognition means.

18. Mobile phone according to claim 17,
**characterised in,**
**that** the voice recognition means detects voice activity.

19. Mobile phone according to claim 17,
**characterised in,**
**that** the voice recognition means detects a predefined word.
